# EUROPÄISCHE PATENTSCHRIFT

(11) **EP 4 597 042 B1**
(45) Veröffentlichungstag und Bekanntmachung des Hinweises auf die Patenterteilung: **21.01.2026**
(21) Anmeldenummer: 24154791.8
(22) Anmeldetag: 30.01.2024
(51) Int. Cl.: G01D 5/244

(54) **VORRICHTUNG UND VERFAHREN ZUR POSITIONS-, LÄNGEN- ODER WINKELBESTIMMUNG**
DEVICE AND METHOD FOR DETERMINING POSITION, LENGTH OR ANGLE
DISPOSITIF ET PROCÉDÉ DE DÉTERMINATION DE POSITION, DE LONGUEUR OU D'ANGLE

(43) Veröffentlichungstag der Anmeldung: 06.08.2025
(73) Patentinhaber: SICK AG, 79183 Waldkirch (DE)
(72) Erfinder: SELLMER, Christian, 78166 Donaueschingen (DE); HIRMER, Katrin, 78166 Donaueschingen (DE)
(74) Vertreter: Manitz Finsterwald Patent- und Rechtsanwaltspartnerschaft mbB

(56) Entgegenhaltungen:
- EP-A1- 4 242 595
- DE-C1- 19 747 753
- JP-A- 2015 090 306
- US-B2- 9 285 245

## Beschreibung

Die vorliegende Erfindung betrifft eine Vorrichtung zur Positions-, Längen- oder Winkelbestimmung sowie ein entsprechendes Verfahren.

Vorrichtungen zur Positions-, Längen- oder Winkelbestimmung, die auch als Encoder bezeichnet werden, sowie entsprechende Verfahren können in einer Vielzahl von technischen Bereichen eingesetzt werden. Beispielsweise können solche Vorrichtungen in Werkzeugmaschinen Verwendung finden, wobei eine Positions- oder Winkelmessung eines Werkzeugs relativ zu dem Werkstück ermöglicht wird. Andere Einsatzbereiche sind Drehwinkelsensoren, beispielsweise für Motor-Feedback-Systeme.

Herkömmlicher Weise umfassen solche Vorrichtungen einen ersten und einen zweiten Teil, welche relativ zueinander bewegbar sind. An dem ersten Teil ist eine Codierung mit einer Vielzahl von Codeabschnitten erster Art und zweiter Art angebracht. An dem zweiten Teil ist eine Auslesevorrichtung zur Erfassung zumindest eines Teils der Codierung angebracht. Die Auslesevorrichtung umfasst mehrere Sensoren, welche jeweils zur Erfassung der einzelnen Codeabschnitte und zur Ausgabe eines entsprechenden analogen Messsignals ausgebildet sind. Entsprechende Vorrichtungen umfassen regelmäßig auch einen Analog-Digital-Umsetzer sowie eine Auswerteinheit. Der Analog-Digital-Umsetzer ist dazu ausgebildet, das Messsignal von wenigstens einem der Sensoren anhand eines Abgleichs einzelner Messwerte des Messsignals mit einer Mehrzahl von unterschiedlichen Referenzwerten, insbesondere von Referenzwerten einer einzelnen Art, zu digitalisieren. Die Auswerteinheit ist dazu ausgebildet, aus dem bzw. den digitalisierten Messsignal(en) eine Relativposition zwischen dem ersten und dem zweiten Teil zu ermitteln.

Zur Digitalisierung erfolgt dabei stets ein Abgleich jedes einzelnen Messwerts des Messsignals mit der Gesamtheit von Referenzwerten, welche zur umfassenden Digitalisierung des Messsignals notwendig sind. Konkret liegen alle zu erwartenden Messwerte für jede einzelne Relativposition in einem zusammenhängenden Bereich zwischen einem Maximalwert und einem Minimalwert. Über die Gesamtheit dieser Amplitude hinweg sind je nach gewünschter Auflösung eine Vielzahl von Referenzwerten definiert, welche zur Digitalisierung des Messsignals jeweils alle mit dem aktuellen Messwert abgeglichen werden. Dieser umfassende Abgleich ist relativ zeitintensiv und ermöglicht lediglich eine begrenzte Auflösung der Relativposition. Die Referenzwerte sind dabei an diejenige Komponente des Messsignals angepasst, welche zur Digitalisierung herangezogen werden soll. Soll beispielsweise der Spannungswert des Messsignals zur Digitalisierung herangezogen werden, handelt es sich bei den Referenzwerten um Spannungswerte. Soll hingegen der Stromwert des Messsignals zur Digitalisierung herangezogen werden, handelt es sich bei den Referenzwerten um Stromwerte.

Vor diesem Hintergrund ist es eine Aufgabe der vorliegenden Erfindung, Vorrichtungen und Verfahren zu präsentieren, welche weniger zeitintensiv sind und/oder eine höhere Auflösung der Relativposition ermöglichen.

Diese Aufgabe wird durch Vorrichtungen gemäß Anspruch 1 gelöst. Weiterbildungen dieser sowie ein entsprechendes Verfahren sind den weiteren Ansprüchen zu entnehmen. Ausgestaltungen entsprechend den Oberbegriffen der beiden unabhängigen Ansprüche sind beispielsweise aus der EP 4 242 595 A1 zu entnehmen.

Die erfindungsgemäße Vorrichtung zeichnet sich dadurch aus, dass wenigstens eine Spezifizierungseinheit vorgesehen und dazu ausgebildet ist, anhand von Informationen zur ermittelten Relativposition zwischen dem ersten und dem zweiten Teil ein Spezifizierungssignal, zu erzeugen und an den Analog-Digital-Umsetzer zu übermitteln. Das erzeugte und übermittelte Spezifizierungssignal zeigt dabei eine eingeschränkte Auswahl von Referenzwerten für die Digitalisierung eines nachfolgenden Messsignals bzw. Messwerts an. Der Analog-Digital-Umsetzer ist dazu ausgebildet, die nachfolgende Digitalisierung des wenigstens einen Messsignals, zumindest in einem ersten Schritt, insbesondere vollumfänglich, lediglich anhand von denjenigen Referenzwerten vorzunehmen, welche durch das erhaltene Spezifizierungssignal angezeigt werden.

Mit anderen Worten, die Digitalisierung erfolgt nicht anhand der Gesamtheit der Referenzwerte, welche zur umfassenden Digitalisierung des Messsignals über dessen gesamte Amplitude hinweg notwendig ist, sondern lediglich anhand einer Auswahl dieser Gesamtheit der Referenzwerte. Diese Auswahl wird durch eine Spezifizierungseinheit anhand von Informationen zu einer bereits ermittelten Relativposition getroffen.

Insbesondere identifiziert die Spezifizierungseinheit anhand von Informationen zur ermittelten Relativposition zu einem ersten Zeitpunkt einen Bereich von Relativpositionen, in welchem die Relativposition zu einem nachfolgenden zweiten Zeitpunkt liegen kann. Dem Bereich von möglichen Relativpositionen zum zweiten Zeitpunkt ist ein Bereich von Messwerten zugeordnet, welche erwartet werden können. In diesem Bereich der Gesamtamplitude des Messsignals liegen wiederum Referenzwerte. Die Digitalisierung des nachfolgenden Messsignals erfolgt schließlich lediglich anhand von Referenzwerten aus diesem Bereich, und nicht anhand der Gesamtheit der Referenzwerte.

Dies ermöglicht eine zielgerichtete Abtastung des Messsignals und ist damit besonders effizient. Dabei versteht es sich natürlich, dass der erste Zeitpunkt und der zweite Zeitpunkt im Vergleich zur Geschwindigkeit der Relativbewegung nahe beieinander liegen müssen, um auch eine tatsächliche Einschränkung des Bereichs zu erhalten, aus welchem die Referenzwerte stammen. Insbesondere beträgt ein Zeitraum zwischen dem ersten Zeitpunkt und dem zweiten Zeitpunkt höchstens 50%, bevorzugt höchstens 30% oder 10%, der Zeit, welche das Messsignal mindestens benötigt, um seine gesamte mögliche Amplitude zu durchlaufen. Je näher die beiden Zeitpunkte beieinander liegen, also je höher die Abtastfrequenz des Messsignals ist, desto größer ist die Wirkung der Einschränkung des Bereichs für die Referenzwerte zur Digitalisierung.

Die erfindungsgemäße Beschränkung der Referenzwerte zur Digitalisierung ermöglicht eine besonders effiziente Digitalisierung des Messsignals. Dies kann beispielsweise bei gleichbleibender zeitlicher und räumlicher Auflösung dazu genutzt werden, die zur Digitalisierung notwendige Zeit zu reduzieren. Als räumliche Auflösung in Bezug auf die Digitalisierung des Messsignals wird vorliegend die Auflösung der jeweiligen Signalamplitude, mit welcher die Amplitude des Messsignals durch den digitalisierten Messwert abgebildet wird, verstanden. Alternativ (oder ergänzend) dazu ist es auch möglich, die Auflösung der Relativposition, sowohl räumlich als auch zeitlich zu erhöhen. Konkret kann die Reduktion der benötigten Zeit pro digitalisierten Messwert dazu verwendet werden, mehr Messwerte (also mit einer höheren Abtastfrequenz) zu digitalisieren und auszuwerten, um die zeitliche Auflösung der Relativposition zu verbessern. Die räumliche Auflösung kann beispielsweise dadurch erhöht werden, dass bei gleichbleibender Abtastfrequenz die eingesparte Zeit dazu verwendet wird, neue ursprünglich nicht vorgesehene Referenzwerte zur Digitalisierung in dem identifizierten Bereich auszuwählen und zur Digitalisierung zu verwenden. Beispielsweise umfasst die Auswahl von zur Digitalisierung vorgesehenen Referenzwerte dann eine erste Gruppe von Referenzwerten aus der Gesamtheit der herkömmlich verwendeten Referenzwerte in einem entsprechenden Bereich und Referenzwerte, welche jeweils zwischen den herkömmlich verwendeten Referenzwerten dieses Bereichs liegen.

Je nach konkreter Ausgestaltung und Zielsetzung können dabei die oben beschriebenen Weiterbildungsmöglichkeiten miteinander kombiniert werden. Angenommen die vorgenommene Einschränkung der Referenzwerte resultiert darin, dass nur noch etwa 40% der herkömmlich notwendigen Abgleiche pro Messwert vorzunehmen sind. Wird dann die Abtastfrequenz verdoppelt, um die zeitliche Auflösung der Relativposition zu verdoppelt, bleibt immer noch eine Gesamtersparnis der notwendigen Zeit von 20%. Mit anderen Worten, eine 60%-tige Reduktion der Zahl von zur Digitalisierung eines Messwerts zu berücksichtigen Referenzwerte ermöglicht eine 100%-tige Steigerung der zeitlichen Auflösung bei einer 20%-tigen Reduktion der notwendigen Zeit bei gleichbleibender räumlicher Auflösung. Selbiges ist auch auf die räumliche Auflösung übertragbar, wobei hier dann der durchschnittliche Abstand der zur Digitalisierung verwendeten Referenzwerte zu reduzieren ist (d.h. die Dichte der Referenzwerte wird erhöht).

Diese spezifische Art der Digitalisierung erfolgt bei einer Mehrzahl von zu digitalisierenden Messsignalen bevorzugt für jedes Messsignal separat, aber bevorzugt synchron für die Gesamtheit der zu digitalisierenden Messsignale.

Bevorzugt ist die Spezifizierungseinheit dazu ausgebildet, anhand der Informationen zur ermittelten Relativposition zwischen dem ersten und dem zweiten Teil eine Auswahl von Referenzwerten für die Digitalisierung zu identifizieren und in Gestalt des Spezifizierungssignals auszugeben, während der Analog-Digital-Umsetzer dazu ausgebildet ist, das erhaltene Spezifizierungssignal direkt mit dem wenigstens einen Messsignal abzugleichen.

Der Abgleich des Spezifizierungssignals mit dem Messsignal erfolgt insbesondere dergestalt, dass effektiv ein einzelner Messwert mit einer Mehrzahl von Referenzwerten abgeglichen wird, um den einzelnen Messwert möglichst genau aufzulösen. Dies ist beispielsweise über eine "Sample-and-Hold"-Einheit möglich. Auch kann das Spezifizierungssignal im Vergleich zum Messsignal mit einer deutlich höheren Geschwindigkeit bzw. Frequenz variieren.

Alternativ dazu ist die Spezifizierungseinheit bevorzugt dazu ausgebildet, das Spezifizierungssignal derart zu erzeugen, dass dieses lediglich mittelbar eine Auswahl von Referenzwerten zur Digitalisierung des wenigstens einen Messsignals anzeigt, während der Analog-Digital-Umsetzer dazu ausgebildet ist, aus dem erhaltenen Spezifizierungssignal auf die hierdurch angezeigte Auswahl von Referenzwerten für die Digitalisierung zu schließen und die Digitalisierung des wenigstens einen Messsignals zunächst lediglich anhand dieser Auswahl von Referenzwerten vorzunehmen.

Diese Variante ist wohl etwas komplexer, ermöglicht aber eine freiere Umsetzung der Vorrichtung und Anpassung des finalen Digitalisierungsprozesses innerhalb des Analog-Digital-Umsetzers. Die räumliche Auflösung (also die Zahl der zur Digitalisierung berücksichtigten Referenzwerte) der Vorrichtung könnte dann direkt am Analog-Digital-Umsetzer (bzw. durch diesen) eingestellt werden. Auch hier ergibt für den Abgleich der Einsatz einer "Sample-and-Hold"-Einheit Sinn.

Bevorzugt ist die Spezifizierungseinheit dazu ausgebildet, das Spezifizierungssignal derart zu erzeugen, dass dieses lediglich einen Bereich von Referenzwerten, insbesondere von Spannungswerten, angibt, aus welchem die Auswahl von Referenzwerten für die Digitalisierung zu wählen ist. Der Analog-Digital-Umsetzer ist dazu ausgebildet, selbständig Referenzwerte zur Digitalisierung aus diesem Bereich von Referenzwerten auszuwählen und zur Digitalisierung zu verwenden.

Dies ermöglicht eine freiere und spezifischere Umsetzung der gesamten Vorrichtung und sowie der vorgenommenen Digitalisierung.

Bevorzugt ist ferner wenigstens ein Digital-Analog-Umsetzer vorgesehen und dazu ausgebildet, das Spezifizierungssignal in analoger Form, z.B. als Spannungswert(e), an den Analog-Digital-Umsetzer zu übermitteln.

Dies ermöglicht die analoge Übermittlung des Spezifizierungssignals an den Analog-Digital-Umsetzer zur erleichterten Verarbeitung des Spezifizierungssignals.

Bevorzugt ist die Spezifizierungseinheit dazu ausgebildet, die Auswahl von Signalwerten für die Digitalisierung unter Berücksichtigung, insbesondere auf Grundlage, einer ermittelten ersten Relativposition zu einem ersten Zeitpunkt, einer Zeitdauer, welche seit dem ersten Zeitpunkt verstrichen ist, und einer maximal zulässigen Geschwindigkeit der Relativbewegung zwischen dem ersten und dem zweiten Teil zu treffen.

Konkret ist die Spezifizierungseinheit insbesondere dazu ausgebildet, aus einer ursprünglichen Relativposition und der maximalen Geschwindigkeit der Änderung der Relativposition auf einen Bereich von Relativpositionen zu schließen, welche zu einem späteren Zeitpunkt möglich sind. Basierend hierauf kann die Spezifizierungseinheit eine geeignete Auswahl von Referenzwerten zur effizienten Digitalisierung des Messsignals zu dem späteren Zeitpunkt ermitteln. Ein Abgleich des jeweiligen Messwerts mit Referenzwerten außerhalb des ermittelten Bereichs ist nicht mehr notwendig. Dies erlaubt eine besonders effiziente Digitalisierung und damit die Einsparung von Zeit und/oder die Erhöhung der Auflösung der Relativposition (zeitlich und/oder räumlich).

Bevorzugt ist die Spezifizierungseinheit dazu ausgebildet, die Auswahl von Signalwerten für die Digitalisierung unter Berücksichtigung einer ermittelten Geschwindigkeit der Relativbewegung und insbesondere auch unter Berücksichtigung einer maximalen Beschleunigung der Relativbewegung zu erzeugen.

Dies ermöglicht eine besonders umfassende Spezifizierung der zur Digitalisierung zu verwendenden Referenzwerte und damit eine besonders effiziente Digitalisierung.

Bevorzugt ist die Spezifizierungseinheit dazu ausgebildet, die Auswahl von Referenzwerten für die Digitalisierung unter Berücksichtigung einer aktuellen Richtung der Relativbewegung zu erzeugen.

Die Berücksichtigung der Richtung einer aktuellen Relativbewegung für die Auswahl der Referenzwerte zur Digitalisierung nachfolgender Messwerte ermöglicht eine noch umfassendere Einschränkung der zur Digitalisierung verwendeten Referenzwerte und damit eine noch effizientere Digitalisierung.

Bevorzugt ist die Spezifizierungseinheit dazu ausgebildet, die Auswahl von Signalwerten für die Digitalisierung unter Berücksichtigung von Positions-, Geschwindigkeits- und/oder Beschleunigungsdaten zur Relativbewegung eines oder mehrerer zurückliegender Zeitpunkte zu erzeugen.

Die Berücksichtigung von Informationen zu mehreren Relativpositionen ermöglicht Rückschlüsse auf ein übergeordnetes Muster der Änderung der Relativposition und ermöglicht damit die noch zielgerichtetere Auswahl der Referenzwerte zur effizienten Digitalisierung. Positions-, Geschwindigkeits- und Beschleunigungsdaten sind dabei relativ einfach aus den Informationen zur Relativposition zu ermitteln und eignen sich dabei besonders gut zur Vorhersage der nachfolgenden Relativpositionen und damit zur Einschränkung der Auswahl der zur effizienten Digitalisierung zu verwendenden Referenzwerte.

Erfindungsgemäß ist die Spezifizierungseinheit dazu ausgebildet, die Auswahl von Signalwerten zur Digitalisierung aus der Gesamtheit der zur umfassenden Digitalisierung der Messsignale vorzusehenden Referenzwerte derart auszuwählen, dass die Auswahl von Referenzwerten zur Digitalisierung lediglich den Bereich von zu erwartenden Relativpositionen abdeckt und nicht den gesamten Bereich aller zugelassenen Relativpositionen.

Mit anderen Worten, die Spezifizierungseinheit ist dazu ausgebildet, aus der Gesamtheit der zur Digitalisierung vorgegebenen Referenzwerte diejenigen Referenzwerte auszuwählen, welche einen Bereich von zu erwartenden nachfolgenden Relativpositionen abdecken. Referenzwerte, welche nicht zu erwartenden Relativpositionen zugeordnet sind, können damit bei der Digitalisierung unberücksichtigt bleiben, was die effizientere Digitalisierung ermöglicht.

Bevorzugt ist die Spezifizierungseinheit in die Auswerteinheit integriert.

Dies ermöglicht einen besonders kompakten Gesamtaufbau.

Alternativ dazu kann die Spezifizierungseinheit als eigenständiges Modul ausgebildet sein, welches mit den übrigen Komponenten der Vorrichtung verbunden ist.

Dies ermöglicht eine besonders flexible Umsetzung der Erfindung sowie die einfache Ergänzung herkömmlicher Vorrichtungen um eine erfindungsgemäße Spezifizierungseinheit.

Bevorzugt umfasst die Auswerteinheit eine Diagnoseeinheit, oder ist mit einer solchen gekoppelt. Die besagte Diagnoseeinheit ist dazu ausgebildet, die Kontinuität der bestimmten Relativposition zur überwachen und bei Sprüngen in der ermittelten Relativposition eine entsprechende Fehlermeldung auszugeben.

Je nach Anforderungen kann diese Fehlermeldung dann lediglich in einem Speicher abgelegt werden, einem Benutzer übermittelt werden und/oder einen Korrektur- und/oder Kalibrierungsprozess auslösen. Probleme bei der Relativbewegung und/oder der Bestimmung der Relativposition können damit sicher erkannt und entsprechend gehandhabt werden.

Bevorzugt umfasst die Vorrichtung auch wenigstens eine "Sample-and-Hold"-Einheit.

Eine "Sample-and-Hold"-Einheit oder -Stufe wird genutzt, um den aktuell vorliegenden Messwert (beispielsweise eine Spannung) kurzzeitig zu "speichern". Das heißt, dass auch wenn sich der eigentliche Messwert während des Digitalisierungsprozesses verändert, der am Analog-Digital-Umsetzer anliegende Wert konstant bleibt. "Sample-and-Hold"-Einheiten oder -Stufen können sowohl bei Verwendung von SAR- als auch Sigma-Delta-Analog-Digital-Umsetzern eingesetzt werden.

Erfindungsgemäß umfasst ein Verfahren zur Positions-, Längen-, oder Winkelbestimmung, insbesondere in einer zuvor beschriebenen Vorrichtung, folgende Schritte: Bewegung eines ersten Teils und eines zweiten Teils relativ zueinander; Erfassung zumindest eines Teils einer an dem ersten Teil angebrachten Codierung mittels mehrerer Sensoren einer an dem zweiten Teil angebrachten Auslesevorrichtung, und Ausgabe entsprechender analoger Messsignale; Digitalisierung des Messsignals mindestens eines der Sensoren anhand eines Abgleichs einzelner Messwerte des Messsignals mit einer Mehrzahl von unterschiedlichen Referenzwerten, insbesondere einer einzelnen Art; und Ermittlung einer Relativposition zwischen dem ersten und dem zweiten Teil aus den digitalisierten Messsignalen; sowie die Erzeugung eines Spezifizierungssignals, welches eine eingeschränkte Auswahl von Referenzwerten für die Digitalisierung der nachfolgenden Messsignale anzeigt, anhand von Informationen zur ermittelten Relativposition zwischen dem ersten und dem zweiten Teil. Die nachfolgende Digitalisierung des wenigstens einen Messsignals wird, zumindest in einem ersten Schritt, insbesondere vollumfänglich, lediglich anhand von denjenigen Referenzwerten vorgenommen, welche durch das erzeugte Spezifizierungssignal angezeigt werden.

Mit anderen Worten, in einem ersten Schritt wird die Relativposition zwischen den beiden Teilen anhand eines herkömmlich (umfassend) digitalisierten Messsignals ermittelt, wobei die Digitalisierung auf einem Abgleich der Messwerte mit Referenzwerten einer umfassenden Gesamtheit von Referenzwerten basiert. Die Bestimmung eine nachfolgenden Relativposition beruht ebenfalls auf dem digitalisierten Messsignal, wobei hier vor dem Hintergrund der Informationen zur der ermittelten vorherigen Relativposition die Auswahl der zur Digitalisierung verwendete Referenzwerte gezielt eingeschränkt wurde. Diese Spezifizierung der Referenzwerte ermöglicht eine effizientere Digitalisierung des bzw. der Messsignale und damit die Einsparung von Zeit und/oder die Erhöhung der zeitlichen und/oder räumlichen Auflösung der Relativposition, wie dies oben bereits im Detail beschrieben wurde.

Erfindungsgemäß wird die Auswahl von Referenzwerten zur Digitalisierung aus der Gesamtheit der zur umfassenden Digitalisierung der Messsignale vorzusehenden Referenzwerte derart getroffen, dass die Auswahl von Referenzwerten zur Digitalisierung lediglich den Bereich von zu erwartenden Relativpositionen abdeckt und nicht den gesamten Bereich aller zugelassenen Relativpositionen.

Das erfindungsgemäße Verfahren kann natürlich beliebig mit Verfahrensschritten, welche den oben hinsichtlich der Vorrichtung beschriebenen strukturellen und/oder funktionellen Merkmalen entsprechen, ergänzt und/oder spezifiziert werden.

Nachfolgend wird die Erfindung rein beispielhaft unter Bezugnahme auf die Zeichnungen beschrieben. Es zeigt:
- Fig. 1: eine schematische Ansicht des Aufbaus einer beispielhaften Vorrichtung zur Positions- oder Längenbestimmung; und
- Fig. 2: eine schematische Ansicht einer erfindungsgemäßen Ausgestaltung.

In den Figuren bezeichnen gleiche Bezugszeichen gleiche oder ähnliche Merkmale.

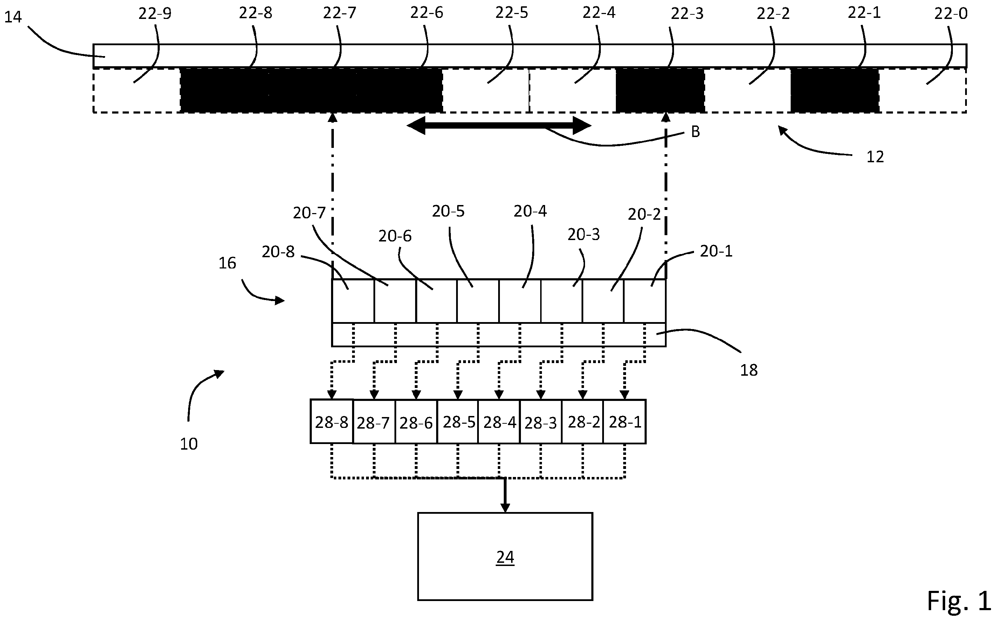

Fig. 1 zeigt schematisch den Grundaufbau einer Vorrichtung 10 zur Positions- oder Längenbestimmung. Die gezeigte Vorrichtung 10 dient als Encoder, beispielsweise in einem Motor-Feedback-System (nicht gezeigt).

Die Vorrichtung 10 umfasst einen ersten Teil 14, an welchem vorliegend eine absolute Codierung 12 angebracht ist. Die Codierung 12 kann je nach Anwendung aber auch in Gestalt einer Inkrementalcodierung vorliegen. Die Vorrichtung 10 umfasst ferner einen zweiten Teil 18, an welchem eine Auslesevorrichtung 16 angebracht ist. Die Codierung 12 und die Auslesevorrichtung 16 sind an dem ersten Teil 14 und an dem zweiten Teil 18 derart befestigt, dass sie sich gemeinsam mit den beiden Teilen 14 und 18 relativ zueinander bewegen. Der erste Teil 14 und der zweite Teil 18 - und damit die Codierung 12 sowie die Auslesevorrichtung 16 - sind im vorliegenden Beispiel rein translatorisch relativ zueinander bewegbar (siehe den Doppelpfeil B). Rein rotatorische Relativbewegungen sind für einen Fachmann auch ohne weiteres umzusetzen.

Die Codierung 12 ist durch eine Vielzahl aufeinander folgender Codeabschnitte 22-0 bis 22-9 erster Art (weiß dargestellt) und zweiter Art (schwarz dargestellt) gebildet. In Fig. 1 sind lediglich zehn solcher Codeabschnitte 22-0 bis 22-9 abgebildet. Die Codierung 12 kann zu den abgebildeten Codeabschnitten 22-0 bis 22-9 links und/oder rechts noch weitere Codeabschnitte umfassen. Dies würde eine Bestimmung der Relativposition zwischen den beiden Teilen 14 und 18 über einen größeren Bereich hinweg ermöglichen, als dies mit den abgebildeten zehn Codeabschnitten 22-0 bis 22-9 möglich ist.

Die Auslesevorrichtung 16 umfasst vorliegend acht Sensoren 20-1 bis 20-8, beispielsweise in Gestalt von Photodioden, wobei die Sensoren 20-1 bis 20-8 parallel zur Codierung 12 nebeneinander angeordnet sind. Die Sensoren 20-1 bis 20-8 sind auf die Codierung 12 ausgerichtet und zur Erfassung der unterschiedlichen Codeabschnitte 22-0 bis 22-9 der Codierung 12 ausgebildet.

Für eine gleichmäßige Beleuchtung der Codeabschnitte 22-0 bis 22-9 kann eine Lichtquelle (nicht gezeigt) vorgesehen sein, welche zumindest diejenigen Codeabschnitte 22-0 bis 22-9 beleuchtet, welche im Erfassungsbereich der Sensoren 20-1 bis 20-8 (der Bereich zwischen den beiden gestrichelt-doppelgepunkteten Pfeilen) liegen. Jeder der Sensoren 20-1 bis 20-8 empfängt - je nach Art der Codeabschnitte 22-0 bis 22-9 in dessen Erfassungsbereich - eine bestimmte Menge von durch die jeweiligen Codeabschnitte 22-0 bis 22-9 reflektierten oder transmittierten Lichts. Die Sensoren 20-1 bis 20-8 geben daraufhin einen entsprechenden Messwert aus, beispielsweise in Gestalt eines Spannungs- oder Stromwerts.

Zur erleichterten Auswertung der Messwerte der Sensoren 20-1 bis 20-8 sind die Codeabschnitte 22-0 bis 22-9 jeweils räumlich identisch zueinander ausgebildet.

Vorliegend wird angenommen, dass der Erfassungsbereich jedes Sensors 20-1 bis 20-8 halb so breit ist, wie die einzelnen Codeabschnitte 22-0 bis 22-9 lang sind. Die Sensoren 20-1 bis 20-8 sind derart auf die Codierung 12 ausgerichtet, dass sie einen zusammenhängenden Erfassungsbereich (siehe den Bereich zwischen den gestrichelt-doppelgepunktet Pfeilen in Fig. 1) auf der Codierung 12 abbilden, welcher in seiner Länge gerade der Länge eines Codeworts der Codierung 12 entspricht. Mit anderen Worten, jeder Codeabschnitt 22-4 bis 22-6, welcher vollkommen im Erfassungsbereich der Sensoren 20-1 bis 20-8 liegt, befindet sich im Erfassungsbereich von zumindest zwei, insbesondere drei, benachbarten Sensoren 20-1 bis 20-8. Dies ermöglicht eine besonders feine Abtastung der Codierung 12 und damit eine besonders genaue Auflösung der Relativposition zwischen dem ersten Teil 14 und dem zweiten Teil 18.

Jedem der Sensoren 20-1 bis 20-8 ist ein separater Analog-Digital-Umsetzer 28-1 bis 28-8 nachgeschaltet. Auch ist es denkbar kombinierte Messsignale mehrerer unterschiedlicher der Sensoren 20-1 bis 20-8, insbesondere mit gleicher Phase, einzelnen gemeinsamen Analog-Digital-Umsetzern zu übermitteln.

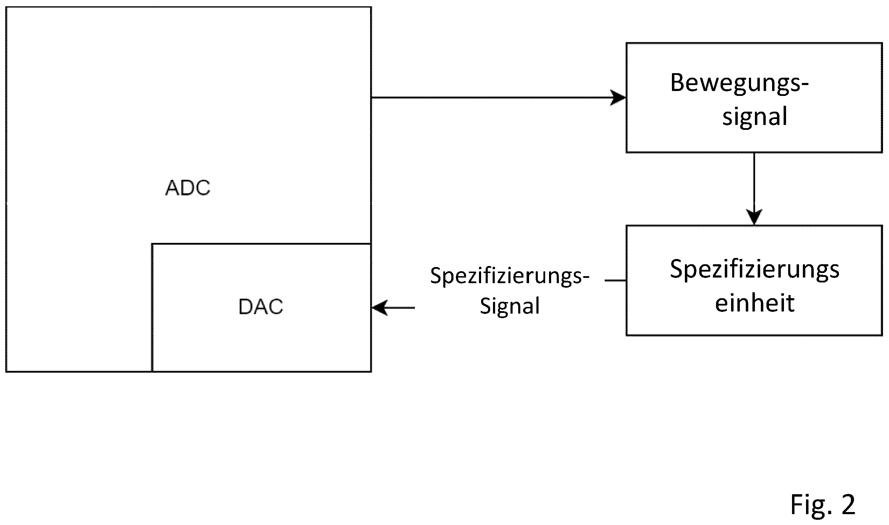

Wie in Fig. 1 angedeutet ist, werden digitalisierte Messsignale von den Sensoren 20-1 bis 20-8 durch die Auswerteinheit 24 in ein Bewegungssignal umgewandelt, welches die relative Position, Bewegungsgeschwindigkeit und/oder Beschleunigung angibt. Aus diesem Bewegungssignal erzeugt eine in der Auswerteinheit 24 enthaltene Spezifizierungseinheit ein Spezifizierungssignal, welches, wie in Fig. 2 gezeigt, über einen Digital-Analog-Umsetzer DAC, dem Analog-Digital-Umsetzer ADC zur Digitalisierung nachfolgender Messsignale übermittelt wird.

Die Digitalisierung in den Analog-Digital-Umsetzern 28-1 bis 28-8 erfolgt dabei über einen Abgleich eines nachfolgend erhaltenen Messsignals von den Sensoren 20-1 bis 20-8 mit dem von der Spezifizierungseinheit erhaltenen Spezifizierungssignal bzw. mit durch dieses Spezifizierungssignal angezeigten Referenzwerten.

Ein hieraus generiertes digitales Vergleichssignal wird dann wiederum zur Analyse der relativen Position, Bewegungsgeschwindigkeit und/oder Beschleunigung an die Auswerteinheit 24 ausgegeben.

Zur Digitalisierung wird dabei effektiv jeder Messwert anhand einer Mehrzahl von unterschiedlichen Referenzwerten binarisiert. Die Auswerteinheit 24 kann dann anhand des entsprechenden Vergleichssignals genauer die konkrete Form des Messsignals rekonstruieren und damit die Positionen der Übergänge im Erfassungsbereich der Sensoren 20-1 bis 20-8 sowie die entsprechende Relativposition zwischen dem ersten Teil 14 und dem zweiten Teil 18 genauer bestimmen.

Anschaulich gesprochen kann im ersten Analog-Digital-Umsetzer 28-1 ein analoger Messwert von dem ersten Sensor 20-1 mit beispielsweise drei unterschiedlichen Referenzwerten verglichen werden, welche durch das Spezifizierungssignal vorgegeben werden. Es sei beispielsweise angenommen, dass ein erster Messwert bei 80% des zulässigen Maximalwerts liegt und die drei durch das Spezifizierungssignal definierten Referenzwerte bei 25%, 50% und 75% liegen. Dann gibt der Analog-Digital-Umsetzer 28-1 als binarisiertes Vergleichssignal für den ersten Messwert ein "111" an die Auswerteinheit 24 aus, da der erste Messwert größer als alle drei Referenzwerte ist. Hieraus kann die Auswerteinheit 24 darauf schließen, dass der Messwert (und damit die zugehörige Überdeckung) bei mindestens 75% liegt. Im Falle eines zweiten nachfolgenden Messwerts von beispielsweise 60% würde das binarisierte Vergleichssignal einer "110" entsprechen. Hieraus kann die Auswerteinheit 24 darauf schließen, dass der zweite Messwert (und damit die zugehörige Überdeckung) zwischen 50% und 75% liegt. Dies erlaubt es der Auswerteinheit 24 eine Unterscheidung zwischen den Situationen der beiden beispielhaften Messwerte von 80% und 60% vorzunehmen. Basierend darauf kann die Auswerteinheit die Relativposition zwischen dem ersten und dem zweiten Teil 14 und 18 genauer bestimmen. Bei einer herkömmlichen Ausgestaltung mit einem festen Vergleichswert von beispielsweise 50% wäre diese Unterscheidung nicht möglich, da die Auswerteinheit 24 im binarisierten Signal keinen Unterschied auflösen kann. Das binarisierte Signal würde nämlich für beide Messwerte lediglich eine "1" anzeigen.

Zu dem obigen Beispiel sei klargestellt, dass in der Praxis die Anzahl der zur Digitalisierung verwendeten Referenzwerte viel höher als drei ist (z.B. bei 10-Bit Analog-Digital-Umsetzer hätte man 2 hoch 10, also 1024 Referenzwerte).

Konkret geht es hierbei um die Unterscheidung von nahe beieinander liegenden Relativpositionen bzw. der Feinbestimmung der Relativposition (also solange sich derselbe Codeabschnitt 22-0 bis 22-9 vor demselben Sensor 20-1 bis 20-8 befindet). Eine Grobbestimmung der Relativposition erfolgt noch immer über einen Abgleich der Gesamtheit der Messwerte aller Sensoren 20-1 bis 20-8 mit dem Gesamtaufbau der Codierung 12.

Herkömmlich wird jeder einzelne Messwert mit der Gesamtheit von zur umfassenden Digitalisierung notwendigen Referenzwerten abgeglichen. Die Gesamtheit dieser Referenzwerte deckt dabei den gesamten Bereich der zulässigen Amplitude des Messsignals ab. Je mehr Referenzwerte über diese Amplitude verteilt sind, desto genauer ist die räumliche Feinauflösung der Relativposition möglich.

Die vorliegende Erfindung basiert auf der Feststellung, dass bei einer ausreichend hohen Abtastfrequenz, also bei lediglich geringfügigen Verschiebungen zwischen zwei aufeinander folgenden Relativpositionen, auch lediglich begrenzte Variationen in den zugehörigen Messwerten bzw. Messsignalen zu erwarten sind. Folglich ist es zur Digitalisierung eines auf einen ersten Messwert folgenden zweiten Messwerts nicht notwendig, die Gesamtheit der zur umfassenden Abtastung des Messsignals notwendigen Referenzwerte mit dem nachfolgenden Messwert abzugleichen. Vielmehr reicht es aus, lediglich eine Auswahl der Referenzwerte zur Digitalisierung zu verwenden.

Zurückkommend auf das obige Beispiel ist beispielsweise zu dem ersten Messwert erkannt worden, dass dieser oberhalb von 75% des Maximalamplitude liegt und damit die beiden Teile 14 und 18 in einer entsprechenden ersten Relativposition zueinander liegen. Bei einer ausreichend hohen Abtastfrequenz ist zu erwarten, dass der nachfolgende Messwert weiterhin in dem Bereich zwischen 75% und 100% liegt oder allerhöchstens in den hieran angrenzenden Bereich von 50% bis 75% "abrutscht". Sofern ein Messwert von unter 50% ausgeschlossen werden kann, reicht es aus, den nachfolgenden Messwert mit den beiden Referenzwerten 50% und 75% abzugleichen, während auf einen Abgleich mit dem Referenzwert von 25% verzichtet wird. Dies ermöglicht eine effizientere Digitalisierung der Messwerte. Je mehr Referenzwerte zur umfassenden Digitalisierung der Messsignale vorgesehen werden, also je genauer die räumliche Auflösung der Relativposition zwischen den beiden Teilen 14 und 18 erfolgt, desto größer fällt der Effizienzgewinn aus. Bei angenommenen zehn Referenzwerten zur Abdeckung der gesamten Amplitude des Messsignals und einer derart hohen Abtastfrequenz, dass höchstens mit einem Wechsel zwischen den durch die Referenzwerte getrennten Bereichen zu rechnen ist, reichen pro Messwert bereits Abgleiche mit zwei bis drei der zehn Referenzwerte, um jeden der Messwerte mit derselben räumlichen Auflösung zu digitalisieren, wie mit einem Abgleich mit allen zehn Referenzwerten.

Entsprechend der vorliegenden Erfindung ist zur Umsetzung dieses Grundgedankens die Spezifizierungseinheit dazu ausgebildet, anhand von Informationen zu einer Relativposition, welche bereits durch die Auswerteinheit 24 ermittelt wurde, aus der Gesamtheit von zur umfassenden Digitalisierung der Messwerte notwendigen Referenzwerte eine Auswahl zu treffen, welche die oben beschriebene besonders effiziente Digitalisierung des Messwerts zu einer nachfolgenden Relativposition ermöglicht. Diese Auswahl wird durch die Spezifizierungseinheit in Gestalt eines entsprechenden Spezifizierungssignals an den oder die entsprechenden Analog-Digital-Umsetzer 28-1 bis 28-8 übermittelt, um dort zur Digitalisierung des jeweiligen Messsignals verwendet zu werden.

Erfindungsgemäß erfolgt also keine Digitalisierung der unterschiedlichen Messwerte anhand eines einzelnen vordefinierten umfassenden Satzes von Referenzwerten, sondern anhand einer für jeden einzelnen Messwert spezifischen Auswahl von Referenzwerten. Die jeweilige Auswahl wird durch die Spezifizierungseinheit anhand der Informationen zu einer früheren Relativposition getroffen. Je höher die Abtastfrequenz des Analog-Digital-Umsetzers 28-1 bis 28-8 ist, desto größer ist die mögliche Einsparung von Zeit. Die eingesparte Zeit kann zur Erhöhung der Auflösung der Relativposition (räumlich und/oder zeitlich) verwendet werden, wie dies bereits oben skizziert wurde.

Es ist dabei möglich, dass die Spezifizierungseinheit das Spezifizierungssignal derart erzeugt, dass dieses durch die vorgesehenen Analog-Digital-Umsetzer 28-1 bis 28-8 direkt mit dem Messsignal abgeglichen werden kann, um dieses zu Digitalisieren. Hierfür umfasst die Spezifizierungseinheit bevorzugter Weise auch einen Digital-Analog-Umsetzer (siehe Fig. 2).

Alternativ dazu kann die Spezifizierungseinheit auch ein Spezifizierungssignal erzeugen, welches eine Verarbeitung durch den Analog-Digital-Umsetzer 28-1 bis 28-8 zur Identifizierung der Auswahl von Referenzwerten zur Digitalisierung verlangt. Hierbei kann das erzeugte Spezifizierungssignal lediglich einen Bereich angeben, aus welchem die zur Digitalisierung zu verwendenden Referenzwerte zu nehmen sind, während der Analog-Digital-Umsetzer 28-1 bis 28-8 dazu ausgebildet ist, selbständig aus diesem Bereich konkrete Referenzwerte auszuwählen und zur Digitalisierung zu verwenden.

Die Spezifizierungseinheit kann die Auswahl von Referenzwerten zur Digitalisierung beispielsweise derart treffen, dass sie ausgehend von einer Relativposition zu einem ersten Zeitpunkt unter Verwendung der maximal zulässigen Relativgeschwindigkeit zwischen den beiden Teilen ermittelt, welche Relativpositionen zum Zeitpunkt eines späteren Messwerts möglich sind. Ist der Zeitraum zwischen dem ersten Zeitpunkt und dem Zeitpunkt des späteren Messwerts ausreichend kurz (also die Abtastfrequenz hoch genug), kann die Spezifizierungseinheit einige Relativpositionen zwischen den beiden Teilen als nicht innerhalb der verstrichenen Zeit erreichbar ausschließen. Basierend darauf kann sie einen Bereich von denjenigen Referenzwerten, welche diesen nicht erreichbaren Relativpositionen zugeordnet sind, bei der Digitalisierung unberücksichtigt lassen. Mit anderen Worten, es werden lediglich diejenigen Referenzwerte zur Digitalisierung des nachfolgenden Messwerts herangezogen, welche erreichbaren Relativpositionen zugeordnet sind. Je höher hierbei die verwendete Abtastfrequenz ist, also je kleiner der Zeitraum zwischen dem ersten Zeitpunkt und dem Zeitpunkt der Folgemessung ist, desto umfassender ist die Beschränkung der zur Digitalisierung verwendeten Referenzwerte.

Zur Veranschaulichung dieses Konzepts wird im Folgenden ein kurzes Beispiel gegeben:
Angenommen bei der Codierung 12 handelt es sich um eine kreisförmige Aneinanderreihung von 512 Codeabschnitten erster Art und 512 Codeabschnitten zweiter Art im Wechsel. Das bedeutet, dass das Messsignal jedes der Sensoren 20-1 bis 20-8 während einer vollständigen Umdrehung 512 sinusähnliche Perioden (also Durchläufe der gesamten Signalamplitude) durchläuft. Jede dieser Perioden ist einem Bereich von 0,7° des Relativwinkels zwischen den beiden Teilen 14 und 18 zugeordnet. Um den Relativwinkel (bzw. die Relativposition) auch in diesem Bereich von 0,7° im Detail auflösen zu können, erfolgt bei beispielsweise maximal zulässigen 200 Umdrehungen pro Sekunde eine Digitalisierung der Messsignale der Sensoren 20-1 bis 20-8 beispielsweise einmal pro Mikrosekunde. Innerhalb dieser einen Mikrosekunde von einem ersten digitalisierten Messwert zum nachfolgenden zu digitalisierenden Messwert kann sich der Relativwinkel angesichts der angenommenen maximalen Drehzahl von 200 Umdrehungen pro Sekunde um höchstens +/- 0,07° ändern.

Erfindungsgemäß werden zur Digitalisierung dieses nachfolgenden Messwerts dann lediglich Referenzwerte verwendet, welche dem Bereich von Relativwinkeln von +/- 0,07° Grad um die vorangegangen bestimmte Relativposition herum zugeordnet sind, anstatt die Referenzwerte zur umfassenden Abtastung des gesamten 0,7° Bereichs zur Digitalisierung des nachfolgenden Messwerts zu verwenden.

Damit werden erfindungsgemäß lediglich Referenzwerte zur Digitalisierung des nachfolgenden Messwerts mit diesem Abgeglichen, welche ein Anteil von 20% (2x0,07° für +/- 0,07°) des gesamten Periodenbereichs von 0,7° abdecken. Dies ermöglicht eine erhebliche Reduktion der Zahl an zur Digitalisierung verwendeten Referenzwerten pro Messwert.

Selbige Überlegungen sind natürlich unmittelbar auf translatorische Ausgestaltungen und/oder nicht-periodische und/oder nicht-symmetrische Ausgestaltungen übertragbar. Hierbei kann es notwendig sein, dass die Spezifizierungseinheit auch Informationen über die Gesamtausgestaltung der verwendeten Codierung 12 und über eine exakte Zuordnung von Codeabschnitten 22-0 bis 22-9 zu entsprechenden Relativposition bei der Auswahl der Referenzwerte berücksichtigt.

Für eine besonders effiziente Digitalisierung ist es dabei notwendig, dass jeder der Analog-Digital-Umsetzer 28-1 bis 28-8 mit einem spezifischen Spezifizierungssignal versorgt wird. Dies schließt jedoch nicht aus, dass es zweckdienlich sein kann, mehreren der Analog-Digital-Umsetzer 28-1 bis 28-8 identische Spezifizierungssignale zu übermitteln und jeweils aus der bekannten Relativpositionierung der unterschiedlichen Sensoren 20-1 bis 20-8 auf entsprechende Referenzwerte zu schließen.

Auch können je nach erkannter vorangehender Relativposition nur einzelnen der vorgesehen Analog-Digital-Umsetzer 28-1 bis 28-8 entsprechende Spezifizierungssignale übermittelt werden. Insbesondere wird dabei denjenigen der Analog-Digital-Umsetzern 28-1 bis 28-8 ein solches Spezifizierungssignal übermittelt, für welche eine Änderung des eingehenden Messsignals erwartbar ist.

Die Auswahl an zur effizienten Digitalisierung zu verwendenden Referenzwerten lässt sich auch anhand der Geschwindigkeit der Relativbewegung zum Zeitpunkt der vorangehend ermittelten Relativposition, und insbesondere unter Berücksichtigung einer maximal zulässigen Beschleunigung der Relativbewegung, noch weiter spezifizieren.

Im obigen Beispiel liegt die Geschwindigkeit bzw. Drehzahl zum ersten Zeitpunkt beispielsweise bei 0 Umdrehungen pro Sekunde. Bei einer bekannten oder angenommenen maximalen Beschleunigung von 10^6 Umdrehungen pro Sekunde im Quadrat kann nach Verstreichen einer Mikrosekunde die Geschwindigkeit bzw. Drehzahl lediglich in einem Bereich von +/- 1 Umdrehung pro Sekunde liegen bzw. sich der Relativwinkel um höchstens +/- 0,00036° verändert haben. Bezogen auf eine Periodenlänge von 0,7° bedeutet dies, dass lediglich Referenzwerte zur Digitalisierung verwendet werden müssen, welche weit weniger als ein Prozent der Gesamtperiode abdecken.

Dabei ist es nicht nur von Vorteil, den Betrag der Geschwindigkeit der Relativbewegung zu der vorangegangenen Relativposition zu berücksichtigen, sondern ermöglicht auch die Berücksichtigung der Richtung der Relativbewegung zum entsprechenden Zeitpunkt eine weitere Einschränkung der Auswahl an Referenzwerten zur effizienten Digitalisierung.

Wie bereits oben beschrieben wurde, kann die Auswahl von Referenzwerten beispielsweise auf Positions-, Geschwindigkeits- und/oder Beschleunigungsdaten zur Relativbewegung der beiden Teile 14 und 18 zu einem, insbesondere zu mehreren, zurückliegenden Zeitpunkten beruhen. Die Analyse der Relativbewegung über mehrere zurückliegende Zeitpunkte hinweg ermöglicht eine Mustererkennung und kann damit zur weiteren Spezifizierung der Auswahl der Referenzwerte zur effizienten Digitalisierung dienen.

Die Spezifizierungseinheit kann als eigenständiges Modul ausgebildet sein, welches mit den übrigen Komponenten der Vorrichtung 10 verbunden ist (wie in Fig. 2 dargestellt ist), oder in die Auswerteinheit 24 integriert sein. Auch kann die Spezifizierungseinheit mit den aufgezählten Komponenten der Vorrichtung 10 gemeinsam ausgebildet sein, also als in den Encoder integriert vorgesehen sein, oder neben den Komponenten des Encoders, beispielsweise auf einem gemeinsamen integrierten Schaltkreis, implementiert sein.

Auch kann eine Diagnoseeinheit (nicht dargestellt), beispielsweise als Bestandteil der Auswerteinheit 24, vorgesehen werden. Eine solche kann dazu dienen, Unregelmäßigkeiten in der Relativbewegung zwischen den beiden Teilen 14 und 18 zu erkennen und hierauf zu reagieren. Als Reaktion auf die Erkennung von Unregelmäßigkeiten können sowohl rein informative Schritte, wie die Ausgabe oder Speicherung einer Fehlermeldung, oder korrektive Schritte, zur Beeinflussung bzw. Korrektur der Ermittlung der Relativposition, erfolgen.

Es versteht sich, dass die hier beschriebene Vorrichtung 10 alternativ zu optischen Sensoren 20-1 bis 20-8 und einer optischen Codierung 12 auch mittels magnetischer, kapazitiver oder induktiver Sensoren sowie einer entsprechenden Codierung 12 ausgebildet werden kann. Auch ergeben sich für einen Fachmann eine Vielzahl an Modifikationen und Abweichungen von den beschriebenen Ausführungsbeispielen, welche hier wohl nicht explizit beschrieben sind, aber dennoch unter den Schutzumfang der Ansprüche fallen.

Abschließen sei noch darauf hingewiesen, dass die vorliegende Erfindung auch ein entsprechendes Verfahren zur Positions-, Längen, oder Winkelbestimmung betrifft.

### Bezugszeichenliste

- 10: Vorrichtung zur Positions-, Längen-, oder Winkelbestimmung
- 12: Codierung
- 14: erster Teil
- 16: Auslesevorrichtung
- 18: zweiter Teil
- 20-1 bis 20-8: Sensoren
- 22-0 bis 22-9: Codeabschnitte
- 24: Auswerteinheit
- 28-1 bis 28-8: Analog-Digital-Umsetzer

## Patentansprüche

1. Vorrichtung (10) zur Positions-, Längen-, oder Winkelbestimmung, umfassend:
- einen ersten und einen zweiten Teil (14, 18), welche relativ zueinander bewegbar sind;
- eine an dem ersten Teil (14) angebrachte Codierung (12) mit einer Vielzahl von Codeabschnitten (22-0 bis 22-9) erster Art und zweiter Art;
- eine an dem zweiten Teil (18) angebrachte Auslesevorrichtung (16) zur Erfassung zumindest eines Teils der Codierung (12), wobei die Auslesevorrichtung (16) mehrere Sensoren (20-1 bis 20-8) umfasst, welche jeweils zur Erfassung der einzelnen Codeabschnitte (22-0 bis 22-9) und zur Ausgabe eines entsprechenden analogen Messsignals ausgebildet sind;
- wenigstens einen Analog-Digital-Umsetzer (28-1 bis 28-8), welcher dazu ausgebildet ist, das Messsignal von wenigstens einem der Sensoren (20-1 bis 20-8) anhand eines Abgleichs einzelner Messwerte des Messsignals mit einer Mehrzahl von unterschiedlichen Referenzwerten, insbesondere einer einzelnen Art, zu digitalisieren; und
- eine Auswerteinheit (24), welche dazu ausgebildet ist, aus dem bzw. den digitalisierten Messsignal(en) eine Relativposition zwischen dem ersten und dem zweiten Teil (14, 18) zu ermitteln;
**dadurch gekennzeichnet, dass**
wenigstens eine Spezifizierungseinheit vorgesehen und dazu ausgebildet ist, anhand von Informationen zur ermittelten Relativposition zwischen dem ersten und dem zweiten Teil (14, 18) ein Spezifizierungssignal, welches eine eingeschränkte Auswahl von Referenzwerten für die Digitalisierung eines nachfolgenden Messsignals bzw. Messwerts anzeigt, zu erzeugen und an den Analog-Digital-Umsetzer (28-1 bis 28-8) zu übermitteln,
wobei der Analog-Digital-Umsetzer (28-1 bis 28-8) dazu ausgebildet ist, die nachfolgende Digitalisierung des wenigstens einen Messsignals, zumindest in einem ersten Schritt, insbesondere vollumfänglich, lediglich anhand von denjenigen Referenzwerten vorzunehmen, welche durch das erhaltene Spezifizierungssignal angezeigt werden,
wobei die Spezifizierungseinheit dazu ausgebildet ist, die Auswahl von Referenzwerten zur Digitalisierung aus der Gesamtheit der zur umfassenden Digitalisierung der Messsignale vorzusehenden Referenzwerte derart zu treffen, dass die Auswahl von Referenzwerten zur Digitalisierung lediglich den Bereich von zu erwartenden Relativpositionen abdeckt und nicht den gesamten Bereich aller zugelassenen Relativpositionen.

2. Vorrichtung (10) nach dem vorhergehenden Anspruch 1,
**dadurch gekennzeichnet, dass**
die Spezifizierungseinheit dazu ausgebildet ist, anhand der Informationen zur ermittelten Relativposition zwischen dem ersten und dem zweiten Teil (14, 18) eine Auswahl von Referenzwerten für die Digitalisierung zu identifizieren und in Gestalt des Spezifizierungssignals auszugeben, während der Analog-Digital-Umsetzer (28-1 bis 28-8) dazu ausgebildet ist, das erhaltene Spezifizierungssignal direkt mit dem wenigstens einen Messsignal abzugleichen.

3. Vorrichtung (10) nach dem vorhergehenden Anspruch 1,
**dadurch gekennzeichnet, dass**
die Spezifizierungseinheit dazu ausgebildet ist, das Spezifizierungssignal derart zu erzeugen, dass dieses lediglich mittelbar eine Auswahl von Referenzwerten zur Digitalisierung des wenigstens einen Messsignals anzeigt, während der Analog-Digital-Umsetzer (28-1 bis 28-8) dazu ausgebildet ist, aus dem erhaltenen Spezifizierungssignal auf die hierdurch angezeigte Auswahl von Referenzwerten für die Digitalisierung zu schließen und die Digitalisierung des wenigstens einen Messsignals zunächst lediglich anhand dieser Auswahl von Referenzwerten vorzunehmen.

4. Vorrichtung (10) nach dem vorhergehenden Anspruch 3,
**dadurch gekennzeichnet, dass**
die Spezifizierungseinheit dazu ausgebildet ist, das Spezifizierungssignal derart zu erzeugen, dass dieses lediglich einen Bereich von Referenzwerten, insbesondere von Spannungswerten, angibt, aus welchem die Auswahl von Referenzwerten für die Digitalisierung zu wählen ist, während der Analog-Digital-Umsetzer (28-1 bis 28-8) dazu ausgebildet ist, selbständig Referenzwerte zur Digitalisierung aus diesem Bereich von Referenzwerten auszuwählen und zur Digitalisierung zu verwenden.

5. Vorrichtung (10) nach einem der vorhergehenden Ansprüche,
**dadurch gekennzeichnet, dass**
die Spezifizierungseinheit wenigstens einen Digital-Analog-Umsetzer umfasst oder ein Digital-Analog-Umsetzer in den Analog-Digital-Umsetzer (28-1 bis 28-8) integriert ist.

6. Vorrichtung (10) nach einem der vorhergehenden Ansprüche,
**dadurch gekennzeichnet, dass**
die Spezifizierungseinheit dazu ausgebildet ist, die Auswahl von Referenzwerten für die Digitalisierung unter Berücksichtigung, insbesondere auf Grundlage, einer ermittelten ersten Relativposition zu einem ersten Zeitpunkt, einer Zeitdauer, welche seit dem ersten Zeitpunkt verstrichen ist, und einer maximal zulässigen Geschwindigkeit der Relativbewegung zwischen dem ersten und dem zweiten Teil (14, 18) zu treffen.

7. Vorrichtung (10) nach einem der vorhergehenden Ansprüche,
**dadurch gekennzeichnet, dass**
die Spezifizierungseinheit dazu ausgebildet ist, die Auswahl von Referenzwerten für die Digitalisierung unter Berücksichtigung einer Geschwindigkeit der Relativbewegung und insbesondere auch unter Berücksichtigung einer maximalen Beschleunigung der Relativbewegung zu treffen.

8. Vorrichtung (10) nach einem der vorhergehenden Ansprüche,
**dadurch gekennzeichnet, dass**
die Spezifizierungseinheit dazu ausgebildet ist, die Auswahl von Referenzwerten für die Digitalisierung unter Berücksichtigung einer Richtung der Relativbewegung zu treffen.

9. Vorrichtung (10) nach einem der vorhergehenden Ansprüche,
**dadurch gekennzeichnet, dass**
die Spezifizierungseinheit dazu ausgebildet ist, die Auswahl von Referenzwerten für die Digitalisierung unter Berücksichtigung von Positions-, Geschwindigkeits- und/oder Beschleunigungsdaten zur Relativbewegung eines oder mehrerer zurückliegender Zeitpunkte zu treffen.

10. Vorrichtung (10) nach einem der vorhergehenden Ansprüche,
**dadurch gekennzeichnet, dass**
die Spezifizierungseinheit in die Auswerteinheit (24) integriert ist.

11. Vorrichtung (10) nach einem der vorhergehenden Ansprüche 1 bis 9,
**dadurch gekennzeichnet, dass**
die Spezifizierungseinheit als eigenständiges Modul ausgebildet ist, welches mit den übrigen Komponenten der Vorrichtung (10) verbunden ist.

12. Vorrichtung (10) nach einem der vorhergehenden Ansprüche,
**dadurch gekennzeichnet, dass**
die Auswerteinheit (24) eine Diagnoseeinheit umfasst oder mit einer solchen gekoppelt ist,
wobei die Diagnoseeinheit dazu ausgebildet ist, die Kontinuität der bestimmten Relativposition zu überwachen und bei Sprüngen in der ermittelten Relativposition eine entsprechende Fehlermeldung auszugeben.

13. Vorrichtung (10) nach einem der vorgehenden Ansprüche,
**dadurch gekennzeichnet, dass**
wenigstens eine "Sample-and-Hold"-Einheit vorgesehen ist.

14. Verfahren zur Positions-, Längen-, oder Winkelbestimmung, insbesondere mittels einer Vorrichtung (10) nach einem der vorhergehenden Ansprüche, wobei das Verfahren umfasst:
Bewegung eines ersten Teils (14) und eines zweiten Teils (18) relativ zueinander;
Erfassung zumindest eines Teils einer an dem ersten Teil (14) angebrachten Codierung (12) mittels mehrerer Sensoren (20-1 bis 20-8) einer an dem zweiten Teil (18) angebrachten Auslesevorrichtung (16), und Ausgabe entsprechender analoger Messsignale;
Digitalisierung des Messsignals mindestens eines der Sensoren (20-1 bis 20-8) anhand eines Abgleichs einzelner Messwerte des Messsignals mit einer Mehrzahl von unterschiedlichen Referenzwerten, insbesondere einer einzelnen Art; und
Ermittlung einer Relativposition zwischen dem ersten und dem zweiten Teil (14, 18) aus den digitalisierten Messsignalen;
**gekennzeichnet, durch**
die Erzeugung eines Spezifizierungssignals, welches eine eingeschränkte Auswahl von Referenzwerten für die Digitalisierung der nachfolgenden Messsignale anzeigt, anhand von Informationen zur ermittelten Relativposition zwischen dem ersten und dem zweiten Teil (14, 18);
wobei die nachfolgende Digitalisierung des wenigstens einen Messsignals , zumindest in einem ersten Schritt, insbesondere vollumfänglich, lediglich anhand von denjenigen Referenzwerten vorgenommen wird, welche durch das erzeugte Spezifizierungssignal angezeigt werden;
wobei die Auswahl von Referenzwerten zur Digitalisierung aus der Gesamtheit der zur umfassenden Digitalisierung der Messsignale vorzusehenden Referenzwerte derart getroffen wird, dass die Auswahl von Referenzwerten zur Digitalisierung lediglich den Bereich von zu erwartenden Relativpositionen abdeckt und nicht den gesamten Bereich aller zugelassenen Relativpositionen.

## Claims

1. An apparatus (10) for position, length or angle determination, comprising:
- a first and a second part (14, 18) which are movable relative to one another;
- a coding (12) which is applied to the first part (14) and which has a plurality of code sections (22-0 to 22-9) of a first kind and a second kind;
- a readout apparatus (16), which is attached to the second part (18), for detecting at least one part of the coding (12), wherein the readout apparatus (16) comprises a plurality of sensors (20-1 to 20-8) which are each configured to detect the individual code sections (22-0 to 22-9) and to output a corresponding analog measurement signal;
- at least one analog-to-digital converter (28-1 to 28-8) which is configured to digitize the measurement signal of at least one of the sensors (20-1 to 20-8) based on a comparison of individual measurement values of the measurement signal with a plurality of different reference values, in particular of a single kind; and
- an evaluation unit (24) which is configured to determine a relative position between the first and the second part (14, 18) from the digitized measurement signal(s);
**characterized in that**
at least one specification unit is provided and is configured, based on information on the determined relative position between the first and the second part (14, 18), to generate a specification signal, which indicates a restricted selection of reference values for the digitization of a subsequent measurement signal or measurement value, and to transmit it to the analog-to-digital converter (28-1 to 28-8),
wherein the analog-to-digital converter (28-1 to 28-8) is configured to perform the subsequent digitization of the at least one measurement signal, at least in a first step, in particular completely, solely based on those reference values which are indicated by the obtained specification signal, wherein the specification unit is configured to make the selection of reference values for the digitization from the totality of the reference values to be provided for a comprehensive digitization of the measurement signals such that the selection of reference values for the digitization only covers the range of relative positions to be expected and not the entire range of all the permitted relative positions.

2. An apparatus (10) according to the preceding claim 1,
**characterized in that**
the specification unit is configured, based on the information on the determined relative position between the first and the second part (14, 18), to identify a selection of reference values for the digitization and to output them in the form of the specification signal, while the analog-to-digital converter (28-1 to 28-8) is configured to compare the obtained specification signal directly with the at least one measurement signal.

3. An apparatus (10) according to the preceding claim 1,
**characterized in that**
the specification unit is configured to generate the specification signal such that it only indirectly indicates a selection of reference values for the digitization of the at least one measurement signal, while the analog-to-digital converter (28-1 to 28-8) is configured to infer, from the obtained specification signal, the hereby indicated selection of reference values for the digitization and to initially perform the digitization of the at least one measurement signal solely based on this selection of reference values.

4. An apparatus (10) according to the preceding claim 3,
**characterized in that**
the specification unit is configured to generate the specification signal such that it only indicates a range of reference values, in particular of voltage values, from which the selection of reference values for the digitization is to be chosen, while the analog-to-digital converter (28-1 to 28-8) is configured to independently select reference values for the digitization from this range of reference values and to use them for the digitization.

5. An apparatus (10) according to any one of the preceding claims,
**characterized in that**
the specification unit comprises at least one digital-to-analog converter or a digital-to-analog converter is integrated into the analog-to-digital converter (28-1 to 28-8).

6. An apparatus (10) according to any one of the preceding claims,
**characterized in that**
the specification unit is configured to make the selection of reference values for the digitization, taking into account, in particular on the basis of, a determined first relative position at a first point in time, a time duration which has elapsed since the first point in time, and a maximum permissible speed of the relative movement between the first and the second part (14, 18).

7. An apparatus (10) according to any one of the preceding claims,
**characterized in that**
the specification unit is configured to make the selection of reference values for the digitization, taking into account a speed of the relative movement and in particular also taking into account a maximum acceleration of the relative movement.

8. An apparatus (10) according to any one of the preceding claims,
**characterized in that**
the specification unit is configured to make the selection of reference values for the digitization, taking into account a direction of the relative movement.

9. An apparatus (10) according to any one of the preceding claims,
**characterized in that**
the specification unit is configured to make the selection of reference values for the digitization, taking into account position data, speed data and/or acceleration data for the relative movement of one or more points in time in the past.

10. An apparatus (10) according to any one of the preceding claims, **characterized in that**
the specification unit is integrated into the evaluation unit (24).

11. An apparatus (10) according to any one of the preceding claims 1 to 9,
**characterized in that**
the specification unit is configured as an independent module which is connected to the other components of the apparatus (10).

12. An apparatus (10) according to any one of the preceding claims,
**characterized in that**
the evaluation unit (24) comprises a diagnostic unit or is coupled to such a unit,
wherein the diagnostic unit is configured to monitor the continuity of the determined relative position and to output a corresponding error message in the event of jumps in the determined relative position.

13. An apparatus (10) according to any one of the preceding claims,
**characterized in that**
at least one "sample-and-hold" unit is provided.

14. A method for position, length or angle determination, in particular by means of an apparatus (10) according to any one of the preceding claims, wherein the method comprises:
moving a first part (14) and a second part (18) relative to one another;
detecting at least one part of a coding (12) applied to the first part (14) by means of a plurality of sensors (20-1 to 20-8) of a readout apparatus (16) attached to the second part (18), and outputting corresponding analog measurement signals;
digitizing the measurement signal of at least one of the sensors (20-1 to 20-8) based on a comparison of individual measurement values of the measurement signal with a plurality of different reference values, in particular of a single kind; and
determining a relative position between the first and the second part (14, 18) from the digitized measurement signals,
**characterized by**
the generation of a specification signal, which indicates a restricted selection of reference values for the digitization of the subsequent measurement signals, based on information on the determined relative position between the first and the second part (14, 18);
wherein the subsequent digitization of the at least one measurement signal, at least in a first step, in particular completely, is performed solely based on those reference values which are indicated by the generated specification signal;
wherein the selection of reference values for the digitization from the totality of the reference values to be provided for a comprehensive digitization of the measurement signals is made such that the selection of reference values for the digitization only covers the range of relative positions to be expected and not the entire range of all the permitted relative positions.

## Revendications

1. Dispositif (10) de détermination de la position, de la longueur ou de l'angle, comprenant :
- une première et une seconde partie (14, 18), qui sont mobiles l'une par rapport à l'autre,
- un codage (12) fixé à la première partie (14) et comportant une pluralité de sections de code (22-0 à 22-9) d'un premier type et d'un second type ;
- un dispositif de lecture (16) fixé à la seconde partie (18) et destiné à détecter au moins une partie du codage (12), le dispositif de lecture (16) comprenant plusieurs capteurs (20-1 à 20-8) qui sont chacun conçus pour détecter les sections de code individuelles (22-0 à 22-9) et pour émettre un signal de mesure analogique correspondant ;
- au moins un convertisseur analogique-numérique (28-1 à 28-8) conçu pour numériser le signal de mesure de l'un au moins des capteurs (20-1 à 20-8) à l'aide d'une comparaison de valeurs de mesure individuelles du signal de mesure avec une pluralité de valeurs de référence différentes, en particulier d'un seul type ; et
- une unité d'évaluation (24) conçue pour déterminer, à partir du ou des signaux de mesure numérisés, une position relative entre la première et la seconde partie (14, 18) ;
**caractérisé en ce que**
il est prévu au moins une unité de spécification conçue pour générer, à partir d'informations sur la position relative déterminée entre la première et la seconde partie (14, 18), un signal de spécification qui indique une sélection limitée de valeurs de référence pour la numérisation d'un signal de mesure suivant ou d'une valeur de mesure suivante, et pour le transmettre au convertisseur analogique-numérique (28-1 à 28-8),
le convertisseur analogique-numérique (28-1 à 28-8) étant conçu pour effectuer la numérisation suivante dudit au moins un signal de mesure, au moins dans une première étape, en particulier dans son intégralité, uniquement à partir des valeurs de référence indiquées par le signal de spécification obtenu,
l'unité de spécification étant conçue pour faire la sélection des valeurs de référence pour la numérisation à partir de l'ensemble des valeurs de référence prévues pour la numérisation globale des signaux de mesure, de telle sorte que la sélection des valeurs de référence pour la numérisation ne couvre que la plage des positions relatives attendues et non pas la plage complète de toutes les positions relatives autorisées.

2. Dispositif (10) selon la revendication précédente 1,
**caractérisé en ce que**
l'unité de spécification est conçue pour identifier, à l'aide des informations sur la position relative déterminée entre la première et la seconde partie (14, 18), une sélection des valeurs de référence pour la numérisation et pour l'émettre sous la forme du signal de spécification, tandis que le convertisseur analogique-numérique (28-1 à 28-8) est conçu pour comparer directement le signal de spécification obtenu avec ledit au moins un signal de mesure.

3. Dispositif (10) selon la revendication précédente 1,
**caractérisé en ce que**
l'unité de spécification est conçue pour générer le signal de spécification de telle sorte que celui-ci n'indique qu'indirectement une sélection des valeurs de référence pour la numérisation dudit au moins un signal de mesure, tandis que le convertisseur analogique-numérique (28-1 à 28-8) est conçu pour conclure, à partir du signal de spécification obtenu, à la sélection ainsi indiquée des valeurs de référence pour la numérisation et pour effectuer la numérisation dudit au moins un signal de mesure dans un premier temps uniquement à l'aide de cette sélection des valeurs de référence.

4. Dispositif (10) selon la revendication précédente 3,
**caractérisé en ce que**
l'unité de spécification est conçue pour générer le signal de spécification de telle sorte que celui-ci n'indique qu'une plage de valeurs de référence, en particulier de valeurs de tension, à partir de laquelle la sélection des valeurs de référence pour la numérisation doit être faite, tandis que le convertisseur analogique-numérique (28-1 à 28-8) est conçu pour sélectionner de manière autonome les valeurs de référence pour la numérisation à partir de cette plage de valeurs de référence et pour les utiliser pour la numérisation.

5. Dispositif (10) selon l'une des revendications précédentes,
**caractérisé en ce que**
l'unité de spécification comprend au moins un convertisseur numérique-analogique, ou un convertisseur numérique-analogique est intégré dans le convertisseur analogique-numérique (28-1 à 28-8).

6. Dispositif (10) selon l'une des revendications précédentes,
**caractérisé en ce que**
l'unité de spécification est conçue pour faire la sélection des valeurs de référence pour la numérisation en prenant en compte, en particulier en se basant sur une première position relative déterminée à un premier instant, une durée écoulée depuis le premier instant et une vitesse maximale admissible du mouvement relatif entre la première et la seconde partie (14, 18).

7. Dispositif (10) selon l'une des revendications précédentes,
**caractérisé en ce que**
l'unité de spécification est conçue pour faire la sélection des valeurs de référence pour la numérisation en prenant en compte une vitesse du mouvement relatif et en particulier également en prenant en compte une accélération maximale du mouvement relatif.

8. Dispositif (10) selon l'une des revendications précédentes,
**caractérisé en ce que**
l'unité de spécification est conçue pour faire la sélection des valeurs de référence pour la numérisation en prenant en compte une direction du mouvement relatif.

9. Dispositif (10) selon l'une des revendications précédentes,
**caractérisé en ce que**
l'unité de spécification est conçue pour faire la sélection des valeurs de référence pour la numérisation en prenant en compte des données de position, de vitesse et/ou d'accélération concernant le mouvement relatif à un ou plusieurs instants antérieurs.

10. Dispositif (10) selon l'une des revendications précédentes,
**caractérisé en ce que**
l'unité de spécification est intégrée dans l'unité d'évaluation (24).

11. Dispositif (10) selon l'une des revendications précédentes 1 à 9,
**caractérisé en ce que**
l'unité de spécification est conçue comme un module autonome qui est relié aux autres composants du dispositif (10).

12. Dispositif (10) selon l'une des revendications précédentes,
**caractérisé en ce que**
l'unité d'évaluation (24) comprend une unité de diagnostic ou est couplée à une telle unité,
l'unité de diagnostic étant conçue pour surveiller la continuité de la position relative déterminée et pour émettre un message d'erreur correspondant en cas de sauts dans la position relative déterminée.

13. Dispositif (10) selon l'une des revendications précédentes,
**caractérisé en ce que**
il est prévu au moins une unité d'échantillonnage et de maintien, dit « Sample-and-Hold ».

14. Procédé de détermination de la position, de la longueur ou de l'angle, en particulier à l'aide d'un dispositif (10) selon l'une des revendications précédentes, le procédé comprenant :
le mouvement d'une première partie (14) et d'une seconde partie (18) l'une par rapport à l'autre ;
la détection d'au moins une partie d'un codage (12) fixé à la première partie (14) au moyen de plusieurs capteurs (20-1 à 20-8) d'un dispositif de lecture (16) fixé à la seconde partie (18), et l'émission de signaux de mesure analogiques correspondants ;
la numérisation du signal de mesure de l'un au moins des capteurs (20-1 à 20-8) à l'aide d'une comparaison des valeurs de mesure individuelles du signal de mesure avec une pluralité de valeurs de référence différentes, en particulier d'un seul type ; et
la détermination d'une position relative entre la première et la seconde partie (14, 18) à partir des signaux de mesure numérisés ;
**caractérisé par**
la génération, à partir d'informations sur la position relative déterminée entre la première et la seconde partie (14, 18), d'un signal de spécification qui indique une sélection limitée de valeurs de référence pour la numérisation des signaux de mesure suivants ;
la numérisation suivante dudit au moins un signal de mesure étant effectuée, au moins dans une première étape, en particulier dans son intégralité, uniquement à partir des valeurs de référence indiquées par le signal de spécification généré ;
la sélection des valeurs de référence pour la numérisation à partir de l'ensemble des valeurs de référence prévues pour la numérisation globale des signaux de mesure, étant faite de telle sorte que la sélection des valeurs de référence pour la numérisation ne couvre que la plage des positions relatives attendues et non pas la plage complète de toutes les positions relatives autorisées.
